# EUROPÄISCHE PATENTSCHRIFT

(11) **EP 1 457 022 B1**
(45) Veröffentlichungstag und Bekanntmachung des Hinweises auf die Patenterteilung: **15.02.2006**
(21) Anmeldenummer: 02799026.6
(22) Anmeldetag: 12.12.2002
(51) Int. Cl.: H04L 29/06, H04L 12/66, H04M 7/00, H04Q 3/00

(54) **ANBINDUNG VON NETZWERKEN MIT UNTERSCHIEDLICHEN PROTOKOLLEN ÜBER EINEN MEDIA GATEWAY CONTROLLER**
INTERFACING OF NETWORKS WITH DIFFERENT PROTOCOLS VIA A MEDIA GATEWAY CONTROLLER
CONNEXION DE RESEAUX A PROTOCOLES DIFFERENTS PAR L'INTERMEDIAIRE D'UN CONTROLEUR DE PASSERELLE DE MEDIA

(30) Priorität: 20.12.2001 DE 10162986
(43) Veröffentlichungstag der Anmeldung: 15.09.2004
(73) Patentinhaber: SIEMENS AKTIENGESELLSCHAFT, 80333 München (DE)
(72) Erfinder: ANGERMAYR, Manfred, 86529 Schrobenhausen (DE)
(86) Internationale Anmeldenummer: PCT/DE2002/004562
(87) Internationale Veröffentlichungsnummer: WO 2003/055166

(56) Entgegenhaltungen:
- ANQUETIL L-P ET AL: "MEDIA GATEWAY CONTROL PROTOCOL AND VOICE OVER IP GATEWAYS. MGCP AND VOIP GATEWAYS WILL OFFER SEAMLESS INTERWORKING OF NEW VOIP NETWORKS WITH TODAY'S TELEPHONE NETWORKS" ELECTRICAL COMMUNICATION, ALCATEL. BRUSSELS, BE, 1. April 1999 (1999-04-01), Seiten 151-157, XP000830045 ISSN: 0013-4252
- NORTEL: "The role of Megaco/H.248 in media gateway control: A protocol standards overview " NORTEL NETWORKS, Dezember 2000 (2000-12), XP002227448 Gefunden im Internet: <URL:http://www.nortelnetworks.com/product s/library/collateral/56025.25-12 -00.pdf> [gefunden am 2003-01-16]
- HEIN M: "SS7-GATEWAYS" FUNKSCHAU, FRANZIS-VERLAG K.G. MUNCHEN, DE, Bd. 72, Nr. 3, 22. Januar 1999 (1999-01-22), Seiten 68-70, XP000833879 ISSN: 0016-2841
- ONG L ET AL: "Framework Architecture for Signaling Transport" IETF REQUEST FOR COMMENTS, XX, XX, Oktober 1999 (1999-10), Seiten 1-21, XP002169054
- HUITEMA C ET AL: "AN ARCHITECTURE FOR RESIDENTIAL INTERNET TELEPHONY SERVICE" IEEE NETWORK, IEEE INC. NEW YORK, US, Bd. 13, Nr. 3, Mai 1999 (1999-05), Seiten 50-56, XP000870631 ISSN: 0890-8044
- BHARATIA V ET AL: "Internet Draft;draft-culpepper-sip-info-event-00.tx t; SIP INFO Method for Event Reporting" INTERNET ENGINEERING TASK FORCE, XX, XX, 18. April 2000 (2000-04-18), Seiten 1-10, XP002206928

## Beschreibung

Die vorliegende Erfindung bezieht sich auf ein System und ein Verfahren zum Verbinden von Netzwerken, die auf unterschiedlichen Protokollen basieren, über ein Übersetzungsprotokoll, wobei auf einem Gateway eines ersten Netzwerkes eine Applikation vorgesehen ist, die mehrere Prozesse aufweist, die jeweils die Statusinformationen eines weiteren Netzwerks abfragen.

Der generelle Hintergrund der vorliegenden Erfindung wie z.B. dargelegt in der Druckschrift : "Medice Gateway Control Protocol and Voice over IP Gateway" von L-P, Anquetil, et al. (1999), Electrical Communication, Alcatel, Brussels, Seiten 151-157, ist das Übermitteln von Signalisierungsinformationen in Netzwerken, bspw. bestehend aus einem IP-Netz und einem auf SS7-Protokoll basierenden Netz, z.B. ein PSTN.

Eine schnelle Einführung und flexible Handhabung von verschiedenen Diensten, wie z. B. Unified Messaging in verschiedenen Netzen erfordert eine netzübergreifende Ablaufsteuerung. Die netzübergreifende Steuerung von Diensten setzt voraus, dass die Controller der IP-Netze mit den Vermittlungsknoten in den verschiedenen Netzen (z.B. Public Switched Telephone Network PSTN, Intelligent Network IN, Public Land Mobile Network PLMN) Signalisierungsinformationen austauschen können.

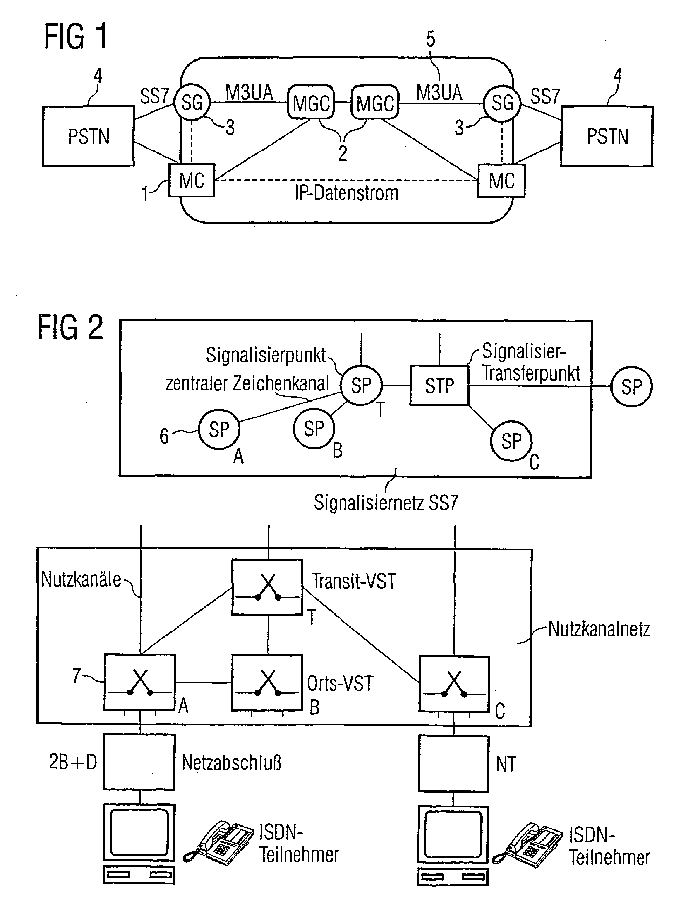

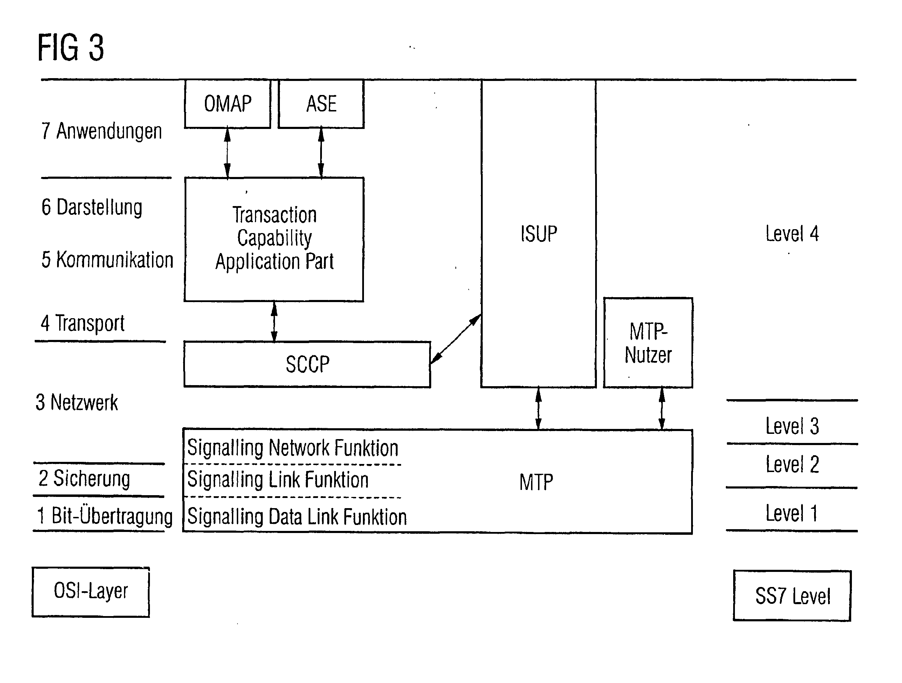

In einem PSTN werden die Signalisierungsinformationen und die Nutzdaten getrennt voneinander in zwei verschieden Netzen übertragen, wie in Fig. 2 dargestellt. Die Nutzdaten werden an Vermittlungsstellen und die Signalisierungsdaten an Signalisierungspunkten weitergeleitet. Die Übertragung im Signalisierungsnetz erfolgt über das SS7-Protokoll mit Hilfe des MTP (SS7-Message Transfer Parts) und der SCCP (Signal Connection Control Parts). Die Protokollarchitektur ist in Fig. 3 dargestellt.

Im Gegensatz dazu findet die Übertragung in einem IP-Netz in der Schicht 3 nach dem OSI-Modell statt.

Um eine reibungslose netzübergreifende Übertragung der Signalisierungsinformationen zu ermöglichen ist daher die Vereinheitlichung der Übertragungsverfahren für Signalisierungsinformationen zwischen den verschiedenen Netzen auf Basis der IP-Technik notwendig. Dazu ist ein Umsetzen der Signalisierungsinformationen an den Grenzen der Netze durch Signaling-Gateways (SG) auf einen einheitlichen Standard notwendig.

Das Signaling Gateway muß grundsätzlich zwei Funktionen erfüllen, nämlich einerseits eine Teilnehmersignalisierung und andererseits eine Zwischenamtsignalisierung.

Die Teilnehmersignalisierung erfolgt zwischen dem Controller und den Teilnehmergeräten bzw. Zugangskomponenten. Die Teilnehmerleitungen werden physikalisch entweder direkt am Gateway beendet oder mit Hilfe von Accesskonzentration zusammengefasst und konzentriert zum Gateway geleitet. Dort werden die Signalisierungsinformationen auf den Teilnehmerleitungen herausgefiltert und für die weitere Übertragung im IP-Netz aufbereitet.

Bei einer Zwischenamtsignalisierungs werden insbesondere beim SS7 zusätzliche Anforderungen an das SG gestellt. Die Signalisierungsinformationen werden getrennt von den Nutzinformationen als Datenpakete in separaten SS7-Netzen mit Hilfe des MTP (SS7-Message Transfer Parts) und der SCCP (Signal Connection Control Parts) übertragen. Das SS7-Signaling Gateway muss über unterschiedliche Netzschnittstellen (ATM, IP) verfügen und verschiedene Transportprotokolle (MTP, SCCP) in Richtung IP-Netz abschließen, damit die Reimplementierung der für IP-Netze nicht geeigneten SS7-Protokollsstacks der SS7-Transportprotokolle in den Controllern bzw. Servern des IP-Netzes nicht nötig ist. Andererseits muss ein Transport der Signalisierungsinformationen im IP-Netz gewährleistet werden, ohne dass die Dienstablaufsteuerung des Netzes in Mitleidenschaft gerät. Hierfür sind verschiedene Protokolle wie z. B. das Stream Control Transmission Protokoll (SCTP) entwickelt worden. Darauf aufsetzend werden User-Adaption-Layer realisiert, mit deren Hilfe die höheren Signalisierungsprotokolle (ISDN aus PSTN, INAP aus PLMN; MAP aus IP), ohne Anpassung im IP-Knoten einsetzbar sind. Die User-Adaption-Layer realisieren die Schnittstelle zwischen den verschiedenen Signalisierungsprotokollen und dem SCTP. Für das SS7 Signalisierungsverfahren sind derzeit die folgenden vier User Adaption Layer in der Spezifikationsphase:
M2PA (MTP-L2-user-peer-two-peer-adaption-layer),
M2UA (MTP-L2-user-adaption-layer),
M3UA (MTP-L3-user-adaption-layer) und
SUA (SCCP-User-Adaption-Layer).

Der M3UA emuliert dabei die Schnittstellen des MTP L3 (SS7 Massage Tranfer Part L3) zu den SS7-Diensten, z.B. für das ISDN-Protokoll ISUP. Er sorgt zusätzlich dafür, dass die Si- - gnalisierungsinformationen zu dem richtigen Controller im Netz gesendet und bei den richtigen Diensten abgeliefert werden.

Im M3UA Protokoll ist eine Applikation eine logische Einheit, welche für das Call Processing eines bestimmten Bereiches zuständig ist. Sie besteht üblicherweise aus ein oder mehreren Prozessen. Nach dem M3UA-Standard arbeiten alle diese Prozesse unabhängig voneinander. Diese Unabhängigkeit bedingt, dass das Signaling Gateway jeden einzelnen dieser Prozesse mit Hilfe des SS7 Signaling Network Managementes (SSNM) über den Zustand des SS7 Netzes informieren muss.
Dazu gehören z.B. Nachrichten wie DUNA (Destination Unavailable), DAVA (Destination Available) oder SCON (SS7 Network Congestion).

In vielen Architekturen laufen indessen alle Prozesse einer bestimmten Applikation auf einem gemeinsamen Host. Typischerweise handelt es sich dabei um einen sogenannten Media Gateway Controller (MGC). Dadurch, dass man für jeden der oben genannte Prozesse nun die gesamte SSNM Information übertragen muss, wird das Netz unnötig belastet.

Ausgehend vom oben genannten Stand der Technik ist es Aufgabe der vorliegenden Erfindung, die Zeit für den Verbindungsaufbau zu reduzieren und insgesamt eine Entlastung des Netzes zu erreichen.

Diese Aufgabe wird erfindungsgemäß durch die Merkmale der unabhängigen Ansprüche gelöst. Die abhängigen Ansprüche bilden den zentralen Gedanken der Erfindung in besonders vorteilhafter Weise weiter.

Zentrale Erkenntnis der Erfindung ist es, dass die von einem Prozess abgefragten Statusinformationen in einem, für alle zu der Applikation gehörende Prozesse zugänglichen, gemeinsamen Speicherbereich übertragen werden.

Ein Beispiel für solch eine Applikation ist eine virtuelle Datenbank, die alle HLR (Home Location Register)- Transaktionen für eine bestimmte Verbindung in den Netzen bearbeitet.

Es ist vorteilhaft, vorab zu überprüfen, ob ein für alle Prozesse gemeinsamer Speicherbereich vorhanden ist, in den die Statusinformationen abgelegt werden können. Laufen nicht alle zu einer Applikation zugehörigen Prozesse auf einem Host ab, so ist es selbstverständlich weiterhin notwendig, alle Statusinformationen an jeden Host, auf dem Prozesse ablaufen, getrennt zu übermitteln.

Die Überprüfung, ob ein solcher gemeinsamer Speicherbereich vorhanden ist, kann statisch in dem Signaling Gateway konfiguriert sein. Dann entscheidet der Signaling Gateway je nach Applikation, ob er die Statusinformationen nur einmal oder für jeden Prozess getrennt übermitteln muss.

Eine weiterentwickelte Möglichkeit besteht darin, durch eine standardkonforme Erweiterung des Übersetzungsprotokolls die Information, ob ein gemeinsamer Speicher vorhanden ist, dynamisch beim Verbindungsaufbau auszutauschen. Dazu kann das Protokoll in der Nachricht, die die Verbindung zwischen einem Prozess und einem Signaling Gateway einleitet, einen zusätzliche Zeichenfolge senden, mit dem es dem Signaling Gateway mitteilt, ob die Statusinformationen nur für einen Prozess oder für alle Prozesse übertragen werden sollen. Mit anderen Worten es wird überprüft, ob redundante Statusinformationen gefiltert werden sollen.

Gemäß dem Übersetzungsprotokoll handelt es sich bei der Zeichenfolge um einen optionalen Parameter, der im Normalfall keinen unbekannten Inhalt aufweisen darf. Beim M3UA-Protokoll muss unbekannter Inhalt nur in dem Parameter "InfoString" übertragen werden, der speziell für nicht spezifizierte Information vorgesehen ist.

Durch diese dynamische Lösung erreicht man also einerseits, dass ein Signaling Gateway, der die Funktion nicht unterstützt, die Zeichenfolge einfach ignoriert und es dadurch zu keinen Fehlern im Protokoll wegen unbekannter Befehle kommt. Wenn andererseits ein Signaling Gateway von einem Protokoll die entsprechende Zeichenfolge nicht erhält, bedeutet dies für ihn, dass die zugehörige Applikation diese Funktion nicht unterstützt und er daher sämtliche Statusinformationen an jeden Prozess dieser Applikation senden muss.

Es ist nicht wichtig welchem Prozess der Signaling Gateway die Information sendet. Zur homogenen Ausnutzung der Hardware-Ressourcen sendet der Signaling Gateway nicht alle Statusinformation an einen Prozess, sondern wählt für jede Nach richt einen andern Prozess als Adressat aus.

Vorteile und Eigenschaften der vorliegenden Erfindung werden nunmehr anhand von einem Ausführungsbeispiel und bezugnehmend auf die Figuren erläutert.
- Figur 1: zeigt ein Netzwerk.
- Figur 2: zeigt eine Datenübertragung in einem PSTN.
- Figur 3: zeigt die Protokollarchitektur eines SS7.

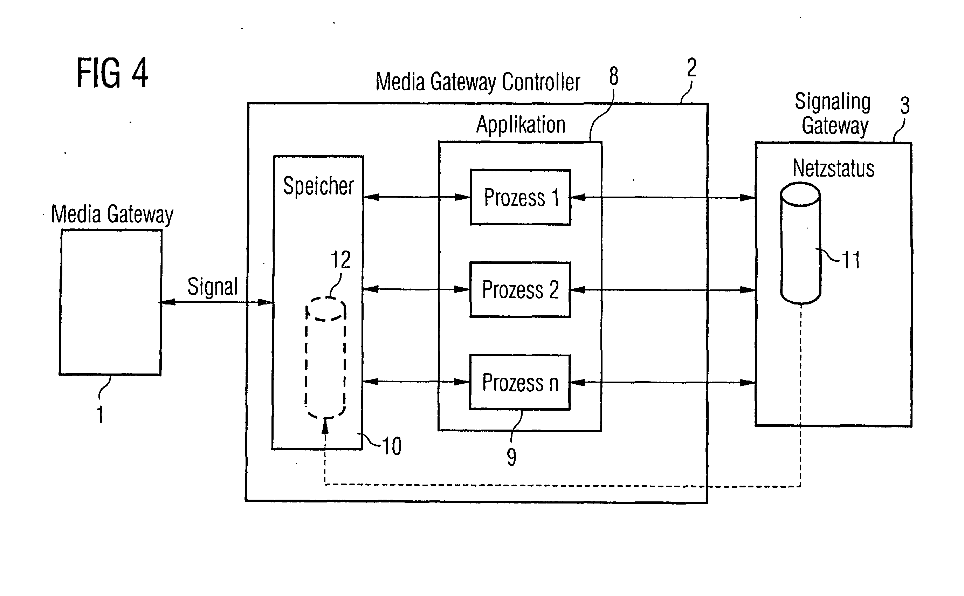

- Figur 4: zeigt den Signalverlauf in einer Applikation.

In Figur 1 ist ein IP-Netzwerk dargestellt, zu dem ein Media Gateway 1 und ein Media Gateway Controller 2 gehören. Dieses Netzwerk ist über ein Signaling Gateway 3 mit einem PSTN (Public Switched Telephone Network) 4 verbunden.
In einem PSTN 4 werden die Signalisierungsinformationen und die Nutzdaten getrennt voneinander in zwei verschiedenen Netzen übertagen, wie in Fig. 2 dargestellt ist. Die Übertragung im Signalisierungsnetz erfolgt über das SS7-Protokoll mit Hilfe des MTP (SS7-Message Transfer Parts) und den SCCP (Signal Connection Control Parts). Die Protokollarchitektur ist in Fig. 3 dargestellt.
Im Gegensatz dazu findet die Übertragung in einem IP-Netz in der Schicht 3 nach dem OSI-Modell statt.

Für die Datenübertragung sind verschiedene Protokolle wie z. B. das Stream Control Transmission Protokoll (SCTP) entwikkelt worden. Darauf aufsetzend werden User-Adaption-Layer realisiert, mit deren Hilfe die höheren Signalisierungsprotokolle ohne Anpassung im IP-Knoten einsetzbar sind. Die User-Adaption-Layer realisieren die Schnittstelle zwischen den verschiedenen Signalisierungsprotokollen und dem SCTP, wobei z. B. ein M3UA (MTP-Layer-3-User-Adaption-Layer) für das erste ISDN-Protokoll ISUP exakt die Schnittstellenumgebung emuliert, die es von einem SS7-Protokoll erwartet.

Das M3UA-Protokoll 5 legt die Kommunikation zwischen dem Signaling Gateway 3 und dem Media Gateway Controller 2 fest.

Auf dem Media Gateway Controller 2 laufen typischerweise diverse Applikationen 8 ab, die jeweils mehrere Prozesse 9 aufweisen. Beim Verbindungsaufbau meldet sich nun jeder dieser Prozesse 9 mit einer Nachricht beim Signaling Gateway 3 an. Daraufhin sendet der Signaling Gateway 3 Informationen 11 über den Zustand des Netzes an die Prozesse.

Die Nachricht des Prozesses enthält als Parameter eine Zeichenfolge "Redundant SSNM Filtering". Der Signaling Gateway 3 muss die Nachricht quittieren. Bevor er nun aber eine AKTIVE-Abfrage des Prozesses 9 akzeptiert, muss er laut M3UA-Protokoll 5 allen weiteren Prozessen der Applikation 8 alle ausgefallenen Ziele im SS7-Netz mitteilen. Da der Signaling Gateway 3 aber aufgrund der "Redundant SSNM Filtering" - Zeichenfolge weiß, dass alle Prozesse 9 dieser Applikation 8 einen gemeinsamen Speicher 10 für die SSNM-Informationen haben, schickt er diese Informationen 11 nicht zu allen, sondern nur zu einem Prozess 9. Auf die im Speicher 10 abgelegte Informationen 12 können alle Prozesse zugreifen. Nach der Übertragung, kann der Signaling Gateway 3 alle Prozesse 9 aktivieren, indem er ein AKTIVE-Bestätigung sendet.

An einen SG können bspw. 16 Prozesse über M3UA/STCP/IP für eine bestimmte Applikation angeschlossen werden. Gibt es in diesem Fall 200 ausgefallenen Ziele zu melden, so muss der Signaling Gateway 3 in diesem Fall nur 1* 200 = 200 SSNM-Nachrichten zum Media Gateway Controller 2 übertragen, bevor alle Prozesse 8 aktiv sind. Gemäß dem Stand der Technik müsste man hingegen 16 * 200 = 3200 SSNM-Nachrichten zu dem Media Gateway Controller 2 senden, bevor alle aktiv werden. Mit der Erfindung kann der Verbindungsaufbau also deutlich beschleunigt werden.

Fällt nun sogar ein SS7-Linkset am Signaling Gateway 3 aus, so kann das im Extremfall dazu führen, dass 2000 SS7-Ziele ausgefallen sind. Diese Information muss jetzt an alle Prozesse 9 mit DUNA (Destination Unavailable) gemeldet werden.

Durch das Filtern der redundanten SSNM-Nachrichten reicht es aber aus, wenn man die Information 11 zu einem einzigen Prozess endet. Es müssen also nicht 16 * 2000 = 32000 DUNA's gesendet werden, sondern es reicht aus, 1 * 2000 Nachrichten zu senden. Die Erfindung ermöglicht also eine deutliche Entlastung des Netzes zwischen dem Signaling Gateway 3 und dem Media Gateway Controller 2.

## Patentansprüche

1. Verfahren zum Anbinden von Netzwerken, die auf unterschiedlichen Protokollen basieren,
über ein Übersetzungsprotokoll (5),
wobei auf einem Gateway Controller (2) eines ersten Netzwerks (4) eine Applikation (8) vorgesehen ist, die mehrere Prozesse (9) aufweist, die jeweils die Statusinformationen (11) über ein Signaling Gateway (3) eines weiteren Netzwerks abfragen,
**dadurch gekennzeichnet,**
**dass** die von einem Prozess (9) abgefragten Statusinformationen (11) in einen für alle zu der Applikation (8) gehörenden Prozesse zugänglichen gemeinsamen Speicherbereich (10) übertragen werden, der sich auf dem Gateway Controller (2) befindet.

2. Verfahren nach Anspruch 1,
**dadurch gekennzeichnet,**
**dass** vorab überprüft wird ob ein gemeinsamer Speicherbereich (10) vorhanden ist in den die Statusinformationen (11) übertragen werden können.

3. Verfahren nach Anspruch 2,
**dadurch gekennzeichnet,**
**dass** die Überprüfung über eine standartkonforme Erweiterung des Übersetzungsprotokolls (5) durch eine zusätzliche Zeichenfolge in der Nachricht erfolgt, die die Verbindung zwischen einem Prozess (9) und einem Signaling Gateways (3) einleitet.

4. Verfahren nach Anspruch 3,
**dadurch gekennzeichnet,**
**dass** in der zusätzlichen Zeichenfolge die Information enthalten ist, dass redundante Statusinformationen (11) gefiltert werden.

5. Verfahren nach Anspruch 2,
**dadurch gekennzeichnet,**
**dass** die Überprüfung für welche Prozesse die Statusinformation (11) nur einmal übertragen werden, statisch im Signaling Gateway (3) konfiguriert ist.

6. Verfahren nach Anspruch 1,
**dadurch gekennzeichnet,**
**dass** verschiedene Statusinfoxmation (11) an verschiedene verteilte Prozesse (9) gesendet werden.

7. System bestehend aus mindestens zwei Netzwerken, die auf unterschiedlichen Protokollen basieren und
über Signaling Gateways (3) mittels eines Übersetzungsprotokoll (5) verbunden sind,
wobei auf einem Gateway Controller (2) eines ersten Netzwerks eine Applikation vorgesehen ist, die mehrere Prozesse aufweist, die jeweils die Statusinformationen (11) eines weiteren Netzwerks abfragen,
**dadurch gekennzeichnet,**
**dass** die von einem Prozess (9) abgefragten Statusinformationen (11) in einem für alle zu der Applikation (8) gehörenden Prozesse zugänglichen gemeinsamen Speicherbereich (10) übertragen werden, der sich auf dem Gateway Controller (2) befindet.

8. System nach Anspruch 7,
derart ausgestaltet,
dass vorab überprüft wird, ob ein gemeinsamer Speicherbereich (10) vorhanden ist.

9. System nach Anspruch 8,
derart ausgestaltet,
dass die Überprüfung über eine standartkonforme Erweiterung des Übersetzungsprotokolls (5) durch eine zusätzliche Zeichenfolge in der Nachricht, die die Verbindung zwischen einem Prozess und einem Signaling Gateway (3) einleitet, erfolgt.

10. System nach Anspruch 8,
derart ausgestaltet,
dass die Überprüfung anhand von statisch im Signaling Gateway (3) konfiguriert Daten erfolgt, in denen festgelegt ist, für welche Applikationen die Statusinformation (11) nur einmal übertragen werden müssen.

11. System nach Anspruch 7,
derart ausgestaltet,
dass verschiedene Statusinformation (11) an verschiedene verteilte Prozesse (8) gesendet werden.

## Claims

1. Method for connecting networks that are based on different protocols
via a translation protocol (5)
whereby a gateway controller (2) of a first network (4) is provided with an application (8) that has multiple processes (9), each of which query the status information (11) via a signalling gateway (3) of another network,
**characterised in that**
the status information (11) queried by a process (9) is transferred to a common storage area (10) which is located on the gateway controller (2) and which can be accessed by all the processes belonging to the application (8).

2. Method according to claim 1,
**characterised in that**
a check is made in advance to determine whether a common storage area (10) is available to which the status information (11) can be transferred.

3. Method according to claim 2,
**characterised in that**
the check is performed via a standard-compliant expansion of the translation protocol (5) by an additional character string in the message that initiates the connection between a process (9) and a signalling gateway (3).

4. Method according to claim 3,
**characterised in that**
the additional character string contains the information that redundant status information (11) is filtered.

5. Method according to claim 2,
**characterised in that**
the check for which processes the status information (11) is to be transferred once only is configured statically in the signalling gateway (3).

6. Method according to claim 1,
**characterised in that**
different status information (11) is sent to different distributed processes (9).

7. System consisting of at least two networks that are based on different protocols and
are connected via signalling gateways (3) by means of a translation protocol (5),
in which a gateway controller (2) of a first network is provided with an application that has multiple processes that each query the status information (11) of another network,
**characterised in that**
the status information (11) queried by a process (9) is transferred to a common storage area (10) which is located on the gateway controller (2) and which can be accessed by all the processes belonging to the application (8).

8. System according to claim 7,
configured such that
a check is made in advance to determine whether a common storage area (10) is available.

9. System according to Claim 8,
configured such that
the check is performed via a standard-compliant expansion of the translation protocol (5) by an additional character string in the message that initiates the connection between a process (9) and a signalling gateway (3).

10. System according to claim 8,
configured such that
the check is performed on the basis of data configured statically in the signalling gateway (3) that indicates for which applications the status information (11) needs to be transferred only once.

11. System according to claim 7,
configured such that
different status information (11) is sent to different distributed processes (8).

## Revendications

1. Procédé de connexion de réseaux basés sur des protocoles différents,
par l'intermédiaire d'un protocole de traduction (5),
sur un contrôleur de passerelle (2) d'un premier réseau (4) étant prévue une application (8) comprenant plusieurs processus (9) lesquels consultent chacun les informations d'état (11) par l'intermédiaire d'une passerelle de signalisation (3) d'un autre réseau,
**caractérisé en ce que**
les informations d'état (11) consultées par un processus (9) sont transmises dans une zone de mémoire commune (10) accessible à tous les processus appartenant à l'application (8) et qui se trouve sur le contrôleur de passerelle (2).

2. Procédé selon la revendication 1,
**caractérisé en ce que**
il est vérifié au préalable s'il existe une zone de mémoire commune (10) dans laquelle les informations d'état (11) peuvent être transmises.

3. Procédé selon la revendication 2,
**caractérisé en ce que**
la vérification par l'intermédiaire d'une extension conforme au standard du protocole de traduction (5) se fait par une suite de caractères supplémentaire dans le message qui initie la connexion entre un processus (9) et une passerelle de signalisation (3).

4. Procédé selon la revendication 3,
**caractérisé en ce que**
dans la suite de caractères supplémentaire est contenue l'information précisant que les informations d'état (11) redondantes sont filtrées.

5. Procédé selon la revendication 2,
**caractérisé en ce que**
la vérification permettant de définir pour quels processus les informations d'état (11) ne sont transmises qu'une fois est configurée statiquement dans la passerelle de signalisation (3).

6. Procédé selon la revendication 1,
**caractérisé en ce que**
différentes informations d'état (11) sont envoyées à différents processus (9) répartis.

7. Système composé d'au moins deux réseaux basés sur des protocoles différents et
connectés par l'intermédiaire de passerelles de signalisation (3) au moyen d'un protocole de traduction (5),
sur un contrôleur de passerelle (2) d'un premier réseau étant prévue une application comprenant plusieurs processus qui consultent chacun les informations d'état (11) d'un autre réseau,
**caractérisé en ce que**
les informations d'état (11) consultées par un processus (9) sont transmises dans une zone de mémoire commune (10) accessible à tous les processus appartenant à l'application (8) et qui se trouve sur le contrôleur de passerelle (2).

8. Système selon la revendication 7,
réalisé de telle sorte
qu'il est vérifié au préalable s'il existe une zone de mémoire commune (10).

9. Système selon la revendication 8,
réalisé de telle sorte
que la vérification par l'intermédiaire d'une extension conforme au standard du protocole de traduction (5) se fait par une suite de caractères supplémentaire dans le message qui initie la connexion entre un processus et une passerelle de signalisation (3).

10. Système selon la revendication 8,
réalisé de telle sorte
que la vérification se fait à l'aide de données configurées statiquement dans la passerelle de signalisation (3) et dans lesquelles est défini pour quelles applications les informations d'état (11) ne doivent être transmises qu'une fois.

11. Système selon la revendication 7,
réalisé de telle sorte
que différentes informations d'état (11) sont envoyées à différents processus (8) répartis.
